(19) Europäisches Patentamt
European Patent Office
Office européen des brevets

(11) Veröffentlichungsnummer: **0 402 709 A2**

(12) # EUROPÄISCHE PATENTANMELDUNG

(21) Anmeldenummer: **90110338.2**

(22) Anmeldetag: **31.05.90**

(51) Int. Cl.5: **C07F 9/24, A01N 57/04, C07F 9/09, C07F 9/165, C07F 9/40, //(C07F9/42,9:20, 9:14)**

(30) Priorität: **13.06.89 DE 3919195**

(43) Veröffentlichungstag der Anmeldung: **19.12.90 Patentblatt 90/51**

(84) Benannte Vertragsstaaten: **BE CH DE FR GB IT LI NL**

(71) Anmelder: **BAYER AG**
**D-5090 Leverkusen 1 Bayerwerk(DE)**

(72) Erfinder: **Sommer, Herbert, Dr.**
**Neuenkamper Strasse 32a**
**D-5630 Solingen 1(DE)**
Erfinder: **Arlt, Dieter,Prof. Dr.**
**Rybniker Strasse 2**
**D-5000 Köln 80(DE)**
Erfinder: **Hartwig, Jürgen, Dr.**
**Franz-Esser-Strasse 44**
**D-5090 Leverkusen 3(DE)**

(54) **(Di)(thio)phosphor(phosphon)säure(amid)ester.**

(57) Die Erfindung betrifft neue (Di)thiophosphor(phosphon)säure(amid)ester der allgemeinen Formel

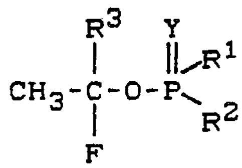

(I)

in welcher
$R^1$ für gegebenenfalls substituierte Reste aus der Reihe Alkyl, Alkoxy, Alkenyl, Alkenyloxy und Alkinyloxy steht,
$R^2$ für Alkoxy, Alkylthio oder für einen Rest

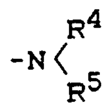

steht,
worin
$R^4$ und $R^5$ gleich oder verschieden sind und unabhängig voneinander für Wasserstoff und für gegebenenfalls substituierte Reste aus der Reihe Alkyl, Cycloalkyl, Alkenyl oder Alkinyl stehen
oder
gemeinsam mit dem Stickstoffatom, an welches sie gebunden sind, einen 5- bis 7-gliedrigen, gesättigten oder ungesättigten Ring bilden,
$R^3$ für Wasserstoff, Halogen oder Alkyl steht und

EP 0 402 709 A2

Y für Sauerstoff oder Schwefel steht,
welche als Schädlingsbkämpfungsmittel verwendet werden können.

## (Di)(thio)phosphor(phosphon)säure(amid)ester

Die Erfindung betrifft neue (Di)(thio)phosphor(phosphon)säure(amid)ester, Verfahren zu ihrer Herstellung und ihre Verwendung als Schädlingsbekämpfungsmittel, insbesondere als Insektizide, Akarizide und Nematizide.

Es ist bereits bekannt, daß bestimmte Thionophosphor(phosphon)säureamidester, wie zum Beispiel O-Methyl-O-(2-chlor-1-fluor-ethyl)-thionophosphorsäurediesteramid, pestizid wirksam sind (vgl. DE-OS 26 29 016, entsprechend US-PS 4 159 324). Die Wirkung und die Wirkungsdauer dieser bekannten Verbindungen sind jedoch, insbesondere bei niedrigen Aufwandmengen bzw. Wirkstoffkonzentrationen, nicht immer voll zufriedenstellend.

Es wurden nun neue (Di)(thio)phosphor(phosphon)säure(amid)ester der allgemeinen Formel

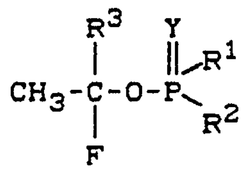

(I)

gefunden,
in welcher
$R^1$ für gegebenenfalls substituierte Reste aus der Reihe Alkyl, Alkoxy, Alkenyl, Alkenyloxy und Alkinyloxy steht,
$R^2$ für Alkoxy, Alkylthio oder für einen Rest

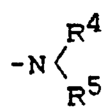

steht,
worin
$R^4$ und $R^5$ gleich oder verschieden sind und unabhängig voneinander für Wasserstoff und für gegebenenfalls substituierte Reste aus der Reihe Alkyl, Cycloalkyl, Alkenyl oder Alkinyl stehen
oder
gemeinsam mit dem Stickstoffatom, an welches sie gebunden sind, einen 5- bis 7-gliedrigen, gesättigten oder ungesättigten Ring bilden,
$R^3$ für Wasserstoff, Halogen oder Alkyl steht und
Y für Sauerstoff oder Schwefel steht.

Die Verbindungen der Formel (I) besitzen gegebenenfalls ein asymmetrisch substituiertes Phosphoratom und/oder Reste mit einem oder mehreren Asymmetrie-Zentren. Sie können daher in verschiedenen optischen Isomerenformen vorliegen, die in unterschiedlichen Mengenverhältnissen anfallen können. In allen Fällen liegen sie vorwiegend als Racemate vor. Die Erfindung betrifft sowohl die Isomerengemische als auch die einzelnen Isomeren.

Im folgenden wird der Einfachheit halber jedoch stets von Verbindungen der Formel (I) gesprochen, obwohl sowohl die reinen Verbindungen als auch die Gemische mit unterschiedlichen Anteilen an enantiomeren und diastereomeren Verbindungen gemeint sind.

Weiterhin wurde gefunden, daß man die neuen (Di)(thio)phosphor(phosphon)säure(amid)ester der Formel (I) erhält,
wenn man
(a) O-(2-Halogen-1-fluor-ethyl)-(di)(thio)phosphor(phosphon)säure(amid)ester-Derivate der Formel

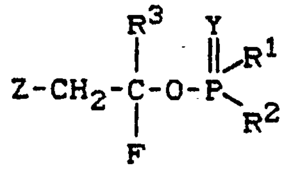

(II)

in welcher
$R^1$, $R^2$, $R^3$ und Y die oben angegebene Bedeutung haben und
Z für Halogen, vorzugsweise Chlor oder Brom steht,
mit Reduktionsmitteln gegebenenfalls in Gegenwart eines Verdünnungsmittels umsetzt,
oder
(b) wenn man O-(1-Fluor-ethyl)-(di)-(thio)phosphor(phosphon)säureesterhalogenide der Formel

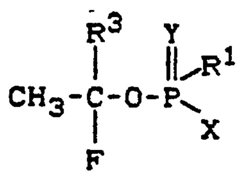

(III)

in welcher
$R^1$, $R^3$ und Y die oben angegebene Bedeutung haben und
X für Halogen, vorzugsweise Chlor steht,
mit Verbindungen der Formel
$R^2$-M (IV)
in welcher
$R^2$ die oben angegebene Bedeutung hat und
M für Wasserstoff oder ein Alkalimetall- oder Erdalkalimetalläquivalent (z. B. Natrium, Kalium oder Calzium) steht,
gegebenenfalls in Gegenwart eines Verdünnungsmittels und gegebenenfalls in Gegenwart eines Säureakzeptors umsetzt.

Die neuen (Di)(thio)phosphor(phosphon)säure(amid)ester der Formel (I) zeichnen sich in überragender Weise durch eine besonders hohe Wirksamkeit als Schädlingsbekämpfungsmittel, insbesondere als Insektizide, Akarizide und Nematizide aus.

Die erfindungsgemäßen Stoffe stellen somit eine wertvolle Bereicherung der Technik dar.

Als gegebenenfalls substituiertes Alkyl in der Definition von $R^1$, $R^3$, $R^4$ und $R^5$ in den allgemeinen Formeln, steht geradkettiges oder verzweigtes Alkyl mit vorzugsweise 1 bis 20, besonders bevorzugt 1 bis 12, insbesondere 1 bis 6 und ganz besonders bevorzugt 1 bis 4 Kohlenstoffatomen. Beispielhaft seien gegebenenfalls substituiertes Methyl, Ethyl, n-Propyl, i-Propyl, n-Butyl, sec-Butyl, i-Butyl, tert-Butyl, n-Pentyl, i-Pentyl und tert-Pentyl genannt.

Für den Begriff gegebenenfalls substituiertes Alkenyl selbst oder als Bestandteil der Gruppe Alkenyloxy in den Definitionen von $R^1$, $R^4$ und $R^5$ in den allgemeinen Formeln steht geradkettiges oder verzweigtes Alkenyl mit vorzugsweise 2 bis 8, besonders bevorzugt 2 bis 6 und insbesondere 2 bis 4 Kohlenstoffatomen. Beispielhaft seien gegebenenfalls substituiertes Vinyl, Allyl 2-Butenyl, 3-Butenyl und 1-Methylallyl genannt.

Unter dem Begriff gegebenenfalls substituiertes Alkoxy in der Definitionen von $R^1$ und $R^2$ in den allgemeinen Formeln ist geradkettiges oder verzweigtes Alkoxy mit vorzugsweise 1 bis 6, insbesondere 1 bis 4 Kohlenstoffatomen zu verstehen. Beispielhaft seien gegebenenfalls substituiertes Methoxy, Ethoxy, Propoxy, Butoxy sowie ihre Isomeren, wie z.B. i-Propoxy, i-, s- und tert.-Butoxy genannt, wobei gegebenenfalls substituiertes Methoxy und Ethoxy besonders hervorgehoben werden.

Unter dem Begriff Alkylthio in der Definition von $R^2$ in den allgemeinen Formeln ist geradkettiges oder verzweigtes Alkylthio mit vorzugsweise 1 bis 6 Kohlenstoffatomen, beispielsweise die folgenden Gruppen zu verstehen: Methylthio-, Ethylthio-, Propylthio-, Butylthio-, Pentylthio sowie ihre Isomeren, wie z. B. i-Propylthio, i-, s- und t-Butylthio, 1-Methyl-butylthio, 2-Methyl-butylthio- und 3-Methyl-butylthio. Bevorzugte Alkylthioreste enthalten 1 bis 4 Kohlenstoffatome. Besonders bevorzugt sind Methylthio, Ethylthio, n-, i-, s-Propylthio und n-, i-, s- und t-Butylthio und ganz besonders bevorzugt sind n-Propylthio und s-Butylthio.

Unter dem Begriff gegebenenfalls substituiertes Alkinyl selbst oder als Bestandteil der Gruppe Alkiny-

loxy in den Definitionen $R^1$, $R^4$ und $R^5$ in den allgemeinen Formeln ist geradkettiges oder verzweigtes Alkinyl mit vorzugsweise 2 bis 6, besonders bevorzugt 2 bis 4 Kohlenstoffatomen zu verstehen. Beispielhaft seien gegebenenfalls substituiertes Ethinyl, 2-Propinyl, 2-Butinyl, 3-Butinyl und 1-Methyl-2-propinyl genannt.

Als gegebenenfalls substituiertes Cycloalkyl in den Definitionen $R^4$ und $R^5$ steht Cycloalkyl mit vorzugsweise 3 bis 8, insbesondere 3, 5 oder 6 Kohlenstoffatomen. Beispielhaft seien gegebenenfalls substituiertes Cyclopropyl, Cyclobutyl, Cyclopentyl, Cyclohexyl und Cycloheptyl genannt.

Die in der Definition von $R^1$, $R^4$ und $R^5$ genannten substituierten Reste können einen oder mehrere, vorzugsweise 1 bis 3, insbesondere 1 oder 2 gleiche oder verschiedene Substituenten tragen. Als bevorzugte Substituenten für Alkyl, Alkenyl und Alkinyl seien aufgeführt:
Alkoxy mit 1 bis 4 Kohlenstoffatomen, wie Methoxy, Ethoxy, n-Propoxy, i-Propoxy, n-Butoxy, i-Butoxy, sec-Butoxy, tert-Butoxy und Halogen.

Die Reste Alkoxy, Alkenyloxy und Alkinyloxy können vorzugsweise durch Halogene wie Fluor, Chlor, Brom und Iod, insbesondere Fluor, Chlor und Brom und durch $C_1$-$C_4$-Alkoxy substituiert sein.

Als bevorzugte Substituenten für Cycloalkyl seien aufgeführt:
Alkyl mit 1 bis 4 Kohlenstoffatomen, wie Methyl, Ethyl, n-Propyl, i-Propyl, n-Butyl, i-Butyl, sec-Butyl und tert-Butyl, Halogenalkyl, wie z.B. Trifluormethyl und Halogen.

Bevorzugt sind die Reste $R^1$, $R^4$ und $R^5$ unsubstituiert.

Halogen, in der Definition $R^3$ und Z in den allgemeinen Formeln sowie als Substituenten für eine Gruppe und darüber hinaus, wo nicht speziell definiert, steht für Fluor, Chlor, Brom und Iod, insbesondere Fluor, Chlor und Brom, im Falle von $R^3$ insbesondere für Fluor und im Falle von Z insbesondere für Brom und Chlor.

Wenn $R^4$ und $R^5$ gemeinsam mit dem Stickstoffatom einen Ring bilden, enthält dieser 5 bis 7, vorzugsweise 5 oder 6 Ringglieder. Der Ring kann 1 bis 3 Doppelbindungen enthalten, vorzugsweise ist er jedoch gesättigt. Als besonders bevorzugte Ringe seien der Pyrrolidin- und der Piperidin-Ring genannt.

In den allgemeinen Formeln steht $R^1$ vorzugsweise für $C_1$-$C_4$-Alkyl und für $C_1$-$C_4$-Alkoxy, insbesondere Methyl, Ethyl, Methoxy und Ethoxy.

In den allgemeinen Formeln steht $R^2$ vorzugsweise für $C_1$-$C_4$-Alkoxy, insbesondere für Methoxy oder Ethoxy, für $C_1$-$C_4$-Alkylthio, insbesondere sek.-Butylthio oder für $C_1$-$C_4$-Alkylamino, insbesondere für n- oder i-Propylamino.

In den allgemeinen Formeln steht $R^3$ vorzugsweise für Wasserstoff oder Halogen (vorzugsweise Fluor).

Y bedeutet in den allgemeinen Formeln vorzugsweise Schwefel.

Die hier aufgeführten bevorzugten Definitionen gelten auch für die im folgenden aufgeführten bevorzugten Kombinationen der Definitionen in entsprechender Weise.

Von den erfindungsgemäßen (Di)(thio)phosphor(phosphon)säure(amid)estern der Formel (I) sind diejenigen bevorzugt,
in welchen
$R^1$ für gegebenenfalls durch Halogen oder $C_1$-$C_4$-Alkoxy substituierte Reste aus der Reihe $C_1$-$C_6$-Alkyl, $C_1$-$C_6$-Alkoxy, $C_2$-$C_6$-Alkenyl, $C_2$-$C_6$-Alkenyloxy und $C_2$-$C_6$-Alkinyloxy steht,
$R^2$ für $C_1$-$C_6$-Alkoxy, $C_1$-$C_6$-Alkylthio oder für einen Rest

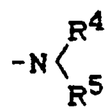

steht,
worin
$R^4$ und $R^5$ gleich oder verschieden sind und unabhängig voneinander für Wasserstoff, für gegebenenfalls durch Halogen oder $C_1$-$C_4$-Alkoxy substituiertes $C_1$-$C_4$-Alkyl; für gegebenenfalls durch Methyl, Ethyl, Fluor und/oder Chlor substituiertes Cycloalkyl mit 3 bis 8 Kohlenstoffatomen; für gegebenenfalls durch Halogen, oder $C_1$-$C_4$-Alkyl substituiertes $C_2$-$C_6$-Alkenyl oder $C_2$-$C_6$-Alkinyl stehen,
oder
gemeinsam mit dem Stickstoffatom einen 5- bis 6-gliedrigen, gesättigten oder ungesättigten Ring bilden,
$R^3$ für Wasserstoff, Fluor, Chlor oder $C_1$-$C_6$-Alkyl (vorzugsweise Wasserstoff oder Fluor) steht und
Y für Sauerstoff oder Schwefel steht.
Besonders bevorzugt sind diejenigen (Di)(thio)phosphor(phosphon)säure(amid)ester der Formel (I),
in welchen
$R^1$ für gegebenenfalls durch Fluor, Chlor, Methoxy oder Ethoxy substituierte Reste aus der Reihe $C_1$-$C_4$-

Alkyl, $C_1$-$C_4$-Alkoxy, $C_2$-$C_4$-Alkenyl, $C_2$-$C_3$-Alkenyloxy und $C_2$-$C_4$-Alkinyloxy steht,
$R^2$ für $C_1$-$C_4$-Alkoxy, $C_1$-$C_4$-Alkylthio oder für einen Rest

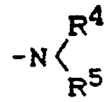

steht,
worin
$R^4$ und $R^5$ gleich oder verschieden sind und unabhängig voneinander für Wasserstoff, für gegebenenfalls durch Fluor, Chlor, Brom, Methoxy oder Ethoxy substituiertes $C_1$-$C_4$-Alkyl, für gegebenenfalls durch Methyl, Ethyl, Fluor und/oder Chlor substituiertes Cycloalkyl mit 3 bis 6 Kohlenstoffatomen; für gegebenenfalls durch Fluor, Chlor, Methyl oder Ethyl substituiertes $C_2$-$C_4$-Alkenyl oder $C_2$-$C_4$-Alkinyl stehen,
oder
gemeinsam mit dem Stickstoffatom, an welches sie gebunden sind, für Piperidyl und Pyrrolidinyl stehen,
$R^3$ für Wasserstoff, Fluor, Chlor oder $C_1$-$C_4$-Alkyl (vorzugsweise Wasserstoff oder Fluor) steht und
Y für Sauerstoff oder Schwefel steht.

Ganz besonders bevorzugt sind diejenigen (Di)(thio)phosphor(phosphon)säure(amid)ester der Formel (I)
in welchen
$R^1$ für Methyl, Ethyl, Methoxy, Ethoxy und Chlorethoxy (vorzugsweise für Methyl, Ethyl, Methoxy und Ethoxy) steht,
$R^2$ für Methoxy, Ethoxy, n- oder i-Propoxy, Methylthio, Ethylthio, n- oder i-Propylthio, n-, i-, s-, t-Butylthio oder für einen Rest

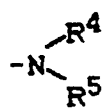

steht,
worin
$R^4$ für Wasserstoff, Methyl oder Ethyl steht,
$R^5$ für Methyl, Ethyl, n-Propyl, i-Propyl, i-Butyl, s-Butyl oder Allyl steht,
$R^3$ für Wasserstoff oder Fluor steht und
Y für Sauerstoff oder Schwefel steht.

Die für die Verbindungen der allgmeinen Formel (I) angegebenen allgemein und bevorzugten Restedefinitionen gelten auch für die Verbindungen der übrigen allgemeinen Formeln (Zwischen- bzw. Vorprodukte) entsprechend.

Verwendet man als Ausgangsstoff beispielsweise O-(2-Brom-1,1-difluor-ethyl)-O-ethyl-thionophosphorsäurediesterisopropylamid und Tributylzinnhydrid als Reduktionsmittel, so kann der Reaktionsablauf der erfindungsgemäßen Verfahrensvariante (a) durch das folgende Formelschema wiedergegeben werden:

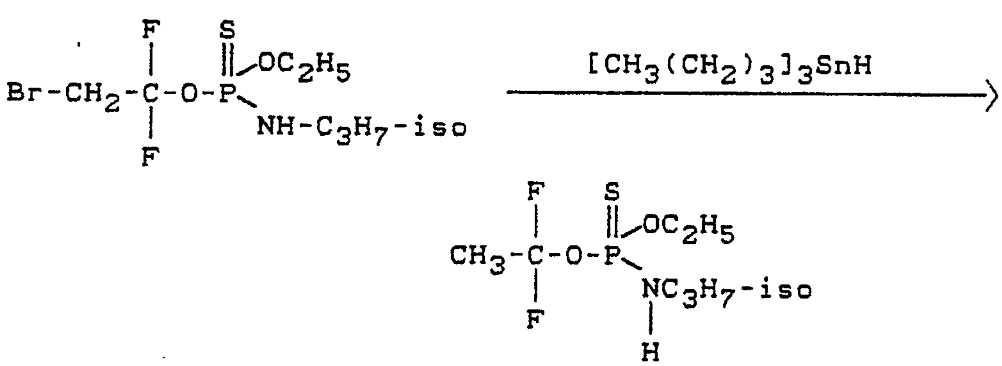


Verwendet man als Ausgangsstoffe beispielsweise O-(1,1-difluor-ethyl)-O-ethyl-thionophosphorsäurediesterchlorid und iso-Propylamin, so kann der Reaktionsablauf der erfindungsgemäßen Verfahrensvariante (b) durch das folgende Formelschema wiedergegeben werden:

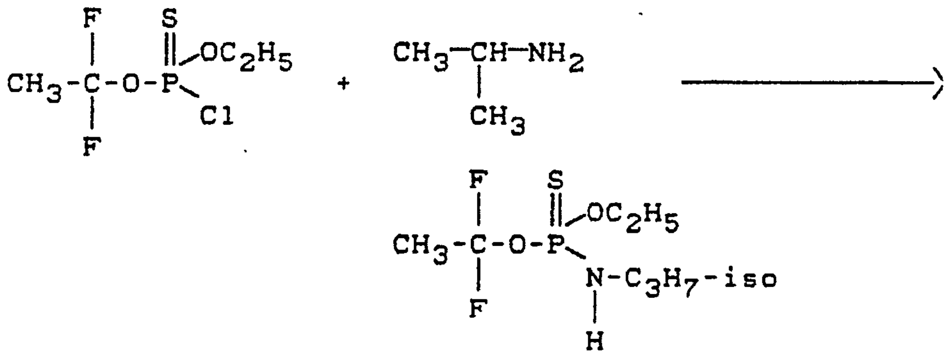

Die bei der erfindungsgemäßen Verfahrensvariante (a) als Ausgangsstoffe zu verwendenden O-(-2-Halogen-1-fluorethyl)-(di)thiophosphor(phosphon)säureester-Derivate der Formel (II) werden erhalten, wenn man O-1-Fluor-2-halogen-ethyl)-(thio)phosphonsäureesterhalogenide der Formel

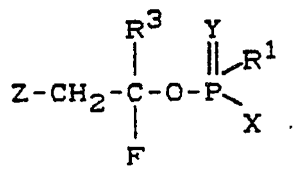

(VII)

in welcher
$R^1$, $R^3$, X, Y und Z die oben angegebene Bedeutung haben
(a) mit Aminen der Formel

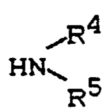

(VIII)

in welcher
$R^4$ und $R^5$ die oben angegebene Bedeutung haben,
gegebenenfalls in Gegenwart eines Verdünnungsmittels (z.B. in Toluol) und gegebenenfalls in Gegenwart eines Säureakzeptors (z.B. Amin der Formel (VIII))
oder
(b) mit Verbindungen der Formel
$R^2$ - M (IV)
in welcher
$R^2$ und M die oben angegebene Bedeutung haben,
gegebenenfalls in Gegenwart eines Verdünnungsmittels (z.B. Toluol) und gegebenenfalls in Gegenwart eines Säureakzeptors (z.B. des Natrium-Salzes der Verbindung der Formel (IV)) umsetzt, wobei jeweils molare Mengen der Reaktionspartner eingesetzt werden können und die Umsetzungen bei Raumtemperatur vorgenommen werden können.

Die Verbindungen der Formel (VII), in welchen Y für Sauerstoff steht, können in bekannter Weise nach üblichen Methoden hergestellt werden (vgl. DE-A-25 28 996).

Die Verbindungen der Formel (VII), in welchen Y für Schwefel steht, können aus den Sauerstoffverbindungen durch die Umsetzung mit Thiophosphonylchlorid ($PSCl_3$) gegebenenfalls in Gegenwart eines Lösungsmittels und gegebenenfalls in Gegenwart eines Phosphorsulfids, wie Phosphor(V)sulfid ($P_2S_5$, $P_4S_{10}$) oder 2,4-Bis-(4-Methoxyphenyl)-1,3,2,4-dithiaphosphetan-2,4-disulfid (Lawesson's Reagenz) erhalten werden.

Die Reduktion gemäß der erfindungsgemäßen Verfahrensvariante (a) kann mit den üblichen Reduktionsmitteln, bevorzugt mit solchen, die für die Reduktion von Halogenalkyl- zu Alkylverbindungen geeignet sind, durchgeführt werden. Besonders geeignet ist hierbei die Reduktion mit Metallhydriden oder komplexen Metallhydriden in inerten Lösungsmitteln. Bevorzugt wird die Reduktion mit komplexen Metallhydriden, wie beispielsweise Tributylzinnhydrid, Lithiumboranat, Natriumboranat, Kaliumboranat, Zinkboranat, Lithium-trialkyl-hydridoboranat, Natrium-trialkyl-hydrido-boranaten, Natrium-cyano-trihydrido-borat oder Lithiumaluminiumhydrid durchgeführt.

Auch Metalle, wie beispielsweise Natrium, Kalium oder Metallsalze, wie beispielsweise Chrom(II)-Salze können verwendet werden.

Gegebenenfalls kann die Reduktion auch durch katalytische Hydrierung in Gegenwart üblicher Hydrierungskatalysatoren (Edelmetallkatalysatoren) insbesondere Palladium-, Platin- oder Cobaltsulfidkatalysatoren, durchgeführt werden.

Ganz besonders bevorzugt wird die Reduktion mit Tributylzinnhydrid durchgeführt.

Die erfindungsgemäße Verfahrensvariante (a) zur Herstellung der neuen Verbindungen der Formel (I) wird bevorzugt unter Verwendung von Verdünnungsmitteln durchgeführt.

Hierzu gehören insbesondere aliphatische oder aromatische, Kohlenwasserstoffe, wie beispielsweise Pentan, Hexan, Heptan, Cyclohexan, Petrolether, Benzin, Ligroin, Benzol, Toluol, Xylol, Ether wie Dimethyl- und Dibutylether, Glykoldimethylether und Diglykoldimethylether, Tetrahydrofuran und Dioxan.

Die Reaktionstemperaturen können bei der Verfahrensvariante (a) zur Herstellung der Verbindungen der Formel (I) in einem größeren Bereich variiert werden. Im allgemeinen arbeitet man bei Temperaturen zwischen -30 °C und 80 °C, vorzugsweise bei Temperaturen zwischen 0 °C und 40 °C.

Die Umsetzung läßt man im allgemeinen bei Normaldruck ablaufen. Zur Durchführung der erfindungsgemäßen Verfahrensvariante (a) setzt man die Reaktionsteilnehmer vorzugsweise im äquimolaren Verhältnis ein. Ein Überschuß an Reduktionsmittel bringt keine wesentlichen Vorteile. Die Reaktion wird vorzugsweise in einem der angegebenen Lösungsmittel durchgeführt. Die Aufarbeitung des Ansatzes erfolgt nach üblichen Methoden.

Die O-(1-Fluor-ethyl)-(di)(thio)phosphor(phosphon)säureesterhalogenide der Formel (III) sind neu und Teil der vorliegenden Erfindung.

Man erhält die Verbindungen der Formel (III), wenn man O-(2-Brom-1-fluor-ethyl)-(di)-(thio)phosphor-(phosphon)säureesterhalogenide der Formel

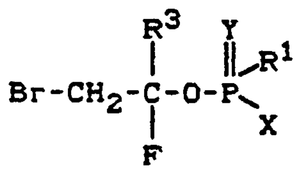
(V)

in welcher
$R^1$, $R^3$ und Y die oben angegebene Bedeutung haben und
X für Halogen, vorzugsweise Chlor, steht,
mit Tributylzinnhydrid der Formel
$[CH_3(CH_2)_3]_3SnH$ (VI)
gegebenenfalls in Gegenwart eines Verdünnungsmittels, wie beispielsweise Toluol, bei Temperaturen zwischen 0 °C und 50 °C reduziert.

Die Verbindungen der Formel (V), in welchen Y für Sauerstoff steht, können noch in bekannter Weise nach üblichen Methoden hergestellt werden (vgl. DE-A-25 28 996). Die Verbindungen der Formel (V), in welchen Y für Schwefel steht können aus den Sauerstoffverbindungen durch die Umsetzung mit Thionylchlorid ($PSCl_3$) gegebenenfalls in Gegenwart eines Lösungsmittels und gegebenenfalls in Gegenwart eines Phosphorsulfids, wie Phosphor(V)sulfid ($P_2S_5$, $P_4S_{10}$) oder 2,4-Bis-(4-Methoxyphenyl)-1,3,2,4-dithiaphosphetan-2,4-disulfid (Lawesson's Reagenz) erhalten werden.

Das weiterhin als Ausgangsstoff zu verwendende Tributylzinnhydrid der Formel (VI) ist eine allgemein bekannte Verbindung der organischen Chemie.

Die erfindungsgemäße Verfahrensvariante (b) zur Herstellung der neuen Verbindungen der Formel (I) wird bevorzugt unter Verwendung von Verdünnungsmitteln durchgeführt.

Hierzu gehören insbesondere aliphatische oder aromatische, gegebenenfalls halogenierte Kohlenwasserstoffe, wie beispielsweise Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Dimethyl- und Dibutylether, Glykoldimethylether und Diglykoldimethylether, Tetrahydrofuran und Dioxan, Ketone wie Aceton, Methyl-ethyl-, Methyl-isopropyl- und Methyl-isobutyl-keton, Ester wie Essigsäuremethylester und -ethylester, Nitrile wie z.B. Acetonitril und Propionitril, Amide wie z.B. Dimethylformamid, Dimethylacetamid und N-Methyl-pyrrolidon sowie Dimethylsulfoxid, Tetramethylensulfon und Hexamethylphosphorsäuretriamid.

Als Säureakzeptoren können bei der Verfahrensvariante (b) zur Herstellung der neuen Verbindungen der Formel (I) alle üblicherweise für derartige Umsetzungen verwendbaren Säurebindemittel eingesetzt werden. Vorzugsweise in Frage kommen Erdalkalimetallhydroxide wie z.B. Calciumhydroxid, Alkalicarbonate und -alkoholate wie Natrium- und Kaliumcarbonat, Natrium- und Kaliummethylat bzw. -ethylat, ferner aliphatische, aromatische oder heterocyclische Amine, beispielsweise Triethylamin, Trimethylamin, Dimethylanilin, Dimethylbenzylamin, Pyridin, Collidin, 1,5-Diazabicyclo-[4,3,0]-non-5-en (DBN), 1,8-Diazabicyclo-[5,4,0]-undec-7-en (DBU) und 1,4-Diazabicyclo-[2,2,2]-octan (DABCO).

Die Reaktionstemperaturen können bei der Verfahrensvariante (b) zur Herstellung der Verbindungen der Formel (I) in einem größeren Bereich variiert werden. Im allgemeinen arbeitet man bei Temperaturen zwischen -30° C und 80° C, vorzugsweise bei Temperaturen zwischen 0° C und 50° C.

Die Umsetzung läßt man im allgemeinen bei Normaldruck ablaufen. Zur Durchführung des erfindungsgemäßen Verfahrens setzt man die Reaktionsteilnehmer vorzugsweise im äquimolaren Verhältnis ein. Ein Überschuß der einen oder anderen Komponente bringt keine wesentlichen Vorteile. Die Reaktion wird vorzugsweise in einem der angegebenen Lösungsmittel in Gegenwart eines Säureakzeptors durchgeführt. Die Aufarbeitung des Ansatzes erfolgt nach üblichen Methoden durch Filtration, Waschen des Filtrats und Abdestillieren des Lösungsmittels.

Die neuen Verbindungen fallen in Form von Ölen an, die sich teilweise nicht unzersetzt destillieren lassen, jedoch durch sogenanntes "Andestillieren", d.h. durch längeres Erhitzen unter vermindertem Druck auf mäßig erhöhte Temperatur von den letzten flüchtigen Anteilen befreit und auf diese Weise gereinigt werden können. Zu ihrer Charakterisierung dient der Retentionsindex (Kovats-Index).

Die Wirkstoffe eignen sich zur Bekämpfung von tierischen Schädlingen, vorzugsweise Arthropoden und Nematoden, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima,

Tortrix viridana.

Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp.

Die erfindungsgemäßen Wirkstoffe der Formel (I) zeichnen sich durch eine hervorragende insektizide Wirksamkeit aus. Sie zeigen insbesondere beim Einsatz als Bodeninsektizide eine hervorragende Wirkung gegen Maden wie z.B. Phorbia antiqua-Maden, gegen Blattläuse, wie z.B. Myzus persicae sowie eine hervorragende Wirkung gegen Nematoden, wie z.B. Meloidogyne incognita.

Die Verbindungen der Formel (I) können somit vorzugsweise als Pflanzenschutzmittel, insbesondere zur Bekämpfung von Bodeninsekten (Insekten, die in allen oder bestimmten Lebensstadien im oder auf dem Boden oder in Bodennähe an Pflanzen vorkommen) und Nematoden eingesetzt werden.

Darüber hinaus zeigen einige der erfindungsgemäßen Wirkstoffe auch eine blattinsektizide und akarizide Wirkung.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethyl keton, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Herstellungsbeispiele:

Beispiel 1

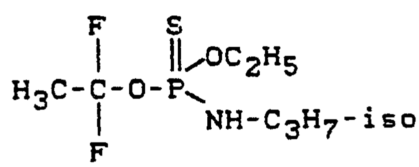

Eine Lösung von 7,9 g (24 mmol) O-(2-Brom-1,1-difluorethyl)-O-ethyl-thionophosphorsäurediester-isopropylamid in 50 ml Toluol wird bei 0 °C mit 7,0 g (24 mmol) Tributylzinnhydrid umgesetzt und 16 Stunden bei Raumtemperatur gerührt. Nach Abziehen des Lösungsmittels wird das Produkt am Kugelrohr bei einem Siedepunkt von 85 °C und einem Druck von 0,01 mbar destilliert.

Man erhalt 4,3 g (72 % der Theorie) O-Ethyl-O-(1,1-difluor-ethyl)-thionophosphorsäurediesterisopropylamid mit dem Retentionsindex 1197*.

In analoger Weise zu Beispiel (1) und unter Berücksichtigung der Angaben in der Beschreibung zu dem erfindungsgemäßen Verfahren, werden die in der folgenden Tabelle 1 aufgeführten Endprodukte der Formel

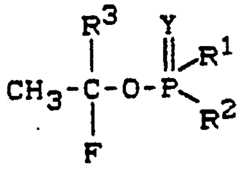

(I)

erhalten:

Tabelle : 1

| Bsp. Nr. | $R^1$ | $R^2$ | $R^3$ | Y | Retentions-index* |
|---|---|---|---|---|---|
| 2 | $OC_2H_5$ | $SC_4H_9$-sec | H | S | 1406 |
| 3 | $C_2H_5$ | $OCH_3$ | F | S | 990 |
| 4 | $C_2H_5$ | $OC_2H_5$ | F | S | 1052 |
| 5 | $OC_2H_5$ | $OC_2H_5$ | H | S | 1112 |
| 6 | $OCH_3$ | NH-$C_3H_7$-iso | H | S | 1171 |
| 7 | $OC_2H_5$ | NH-$C_3H_7$-n | F | S | 1263 |
| 8 | $OC_2H_5$ | NH-$C_4H_9$-iso | F | S | 1299 |
| 9 | $OC_2H_5$ | $SC_4H_9$-sec | F | S | 1362 |
| 10 | $OC_2H_5$ | NH-$C_3H_7$-iso | H | 0 | 1174; 1187 |
| 11 | $OC_2H_5$ | S-$C_3$-$H_7$-n | H | S | 1367 |
| 12 | $OC_2H_5$ | S-$C_4H_9$-iso | H | S | 1408; 1410 |
| 13 | $OC_2H_5$ | S-$C_4H_9$-t | H | S | 1382; 1389 |
| 14 | $OC_2H_5$ | $N(CH_3)_2$ | H | S | 1129; 1138 |
| 15 | $OC_2H_5$ | $N(C_2H_5)_2$ | H | S | 1265; 1270 |
| 16 | $OC_2H_5$ | $NHC_2H_5$ | F | S | 1174 |
| 17 | $OC_2H_5$ | $NHC_2H_5$ | H | S | 1199; 1215 |

* Die Retentionsindices (Kovats-Index) wurden gaschromatographisch auf einer Siedepunktphase (Dimethylsilicon) ermittelt.

Beispiele für die Herstellung der Ausgangsprodukte

A) Ausgangsverbindungen der Formel (II)

Beispiel II-1

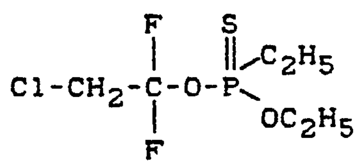

Zu einer Lösung von 7,3 g (0,03 Mol) O-(2-Chlor-1,1-difluor-ethyl)-ethanthionophosphonsäureesterchlorid in 50 ml Toluol tropft man bei 0°C 10,2 g einer 20 %igen Natriumethylat-Lösung (0,03 Mol) ein und rührt 4 Stunden bei Raumtemperatur. Anschließend engt man ein, nimmt in Toluol auf, wäscht zweimal mit Wasser, trocknet die organische Phase, zieht das Lösungsmittel ab und destilliert den Rückstand am Kugelrohr.

Man erhält in 36%iger Ausbeute O-Ethyl-O-(2-chlor-1,1-difluor-ethyl)-ethanthionophosphonsäureester mit dem Retentionsindex 1223*.

Beispiel II-2

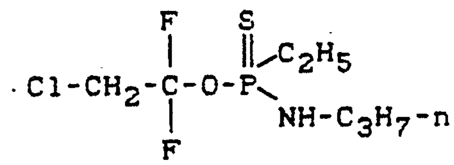

Zu einer Lösung von 7,3 g (0,03 Mol) O-(2-Chlor-1,1-difluor-ethyl)-ethanthionophosphonsäureesterchlorid in 50 ml Toluol tropft man bei Raumtemperatur 3,6 g (0,06 Mol) n-Propylamin. Das Reaktionsgemisch wird zweimal mit Wasser gewaschen, die organische Phase abgetrennt, über Magnesiumsulfat getrocknet und das Toluol unter vermindertem Druck abgezogen.
Man erhält 3,5 g (66 % der Theorie) O-(2-Chlor-1,1-difluor-ethyl)-ethanthionophosphonsäureester-propylamid mit dem Retentionsindex 1461*.

Beispiel II-3

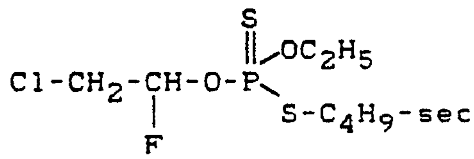

2,7 g (0,03 Mol) sec-Butylmercaptan und 3,4 g (0,03 Mol) Kalium-tert-butylat werden in 100 ml Toluol 1 Stunde auf 50 °C erhitzt. Zu dieser Mischung tropft man bei 0 °C 7,2 g (0,03 Mol) O-Ethyl-O-(2-chlor-1-fluorethyl)-thionophosphorsäurediesterchlorid und rührt anschließend 16 Stunden bei Raumtemperatur.
Das Reaktionsgemsich wird 2 x mit Wasser gewaschen, die organische Phase abgetrennt, über Magnesiumsulfat getrocknet, das Toluol abgedampft und der Rückstand unter stark vermindertem Druck andestilliert.

Man erhält 5,5 g (62 % der Theorie) O-Ethyl-O-(2-chlor-1-fluor-ethyl)-S-(sec-butyl)-dithiophosphorsäureester mit dem Retentionsindex 1587, 1593*.

Beispiel II-4

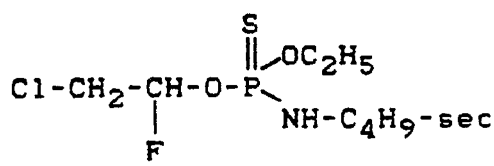

Zu einer Lösung von 7,2 g (0,03 Mol) O-Ethyl-O-(1-fluor-2-chlor-ethyl)-thionophosphorsäurediesterchlorid in 90 ml Toluol tropft man bei +20 °C 4,4 g (0,06 Mol) sec-Butylamin. Das Reaktionsgemisch wird 2 x mit Wasser gewaschen, die organische Phase abgetrennt, über Magnesiumsulfat getrocknet, das Toluol abgedampft und der Rückstand unter stark vermindertem Druck destilliert. Man erhält 6,3 g (76 % der Theorie) O-Ethyl-O-(1-fluor-2-chlor-ethyl)-thionophosphorsäurediester-sec-butylamid mit dem Retentionsindex 1511*.

Beispiel II-5

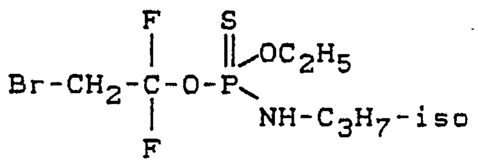

Zu einer Lösung von 22,8 g (0,075 Mol) O-Ethyl-O-(2-brom-1,1-difluor-ethyl)-thionophosphorsäurediesterchlorid in 200 ml Diethylether tropft man bei +20° C 11,1 g (0,19 Mol) Isopropylamin und rührt 16 Stunden bei Raumtemperatur. Das Reaktionsgemisch wird in Wasser gegossen, die organische Phase abgetrennt, über Magnesiumsulfat getrocknet und das Lösungsmittel unter vermindertem Druck abgezogen. Man erhält 16,6 g (68 % der Theorie) O-Ethyl-O-(2-brom-1,1-difluor-ethyl)-thionophosphorsäurediesterisopropylamid mit dem Retentionsindex 1451*.

B) Ausgangsverbindungen der Formel (V)

Beispiel (V-1)

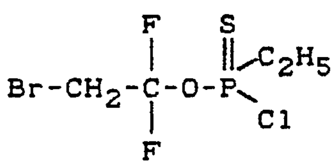

581 g (2,14 Mol) O-(2-Brom-1,1-difluor-ethyl)-ethanphosphonsäureesterchlorid, 1303 g (7,7 Mol) Thiophosphorylchlorid und 13,1 g (0,06 Mol) Phosphor(V)sulfid werden 5 Tage auf 140° C Badtemperatur erhitzt und anschließend destilliert.
Man erhält 566 g (92 % der Theorie) O-(2-Brom-1,1-difluor-ethyl)-ethanthionophosphonsäureesterchlorid vom Siedepunkt 61° C/0,7 mbar mit dem Retentionsindex 1242*.

Beispiel (V-2)

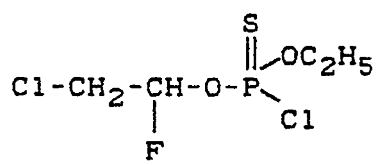

Eine Lösung von 133,4 g (0,58 Mol) O-(2-Chlor-1-fluorethyl)-thionophosphorsäuredichlorid in 900 ml Toluol versetzt man bei 0° C mit 204 g (0,6 Mol) einer 20 %igen Natriumethylatlösung, rührt das Gemisch 16 Stunden bei Raumtemperatur nach, wäscht es 2 mal mit Wasser, trocknet die organsiche Phase über Magnesiumsulfat und dampft das Toluol unter vermindertem Druck ab.
Man erhält 115,9 g (83 % der Theorie) O-Ethyl-O-(2-chlor-1-fluor-ethyl)-thionophosphorsäurediesterchlorid.

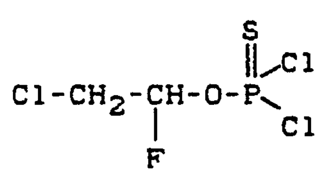

479,2 g (2,22 Mol) O-(2-Chlor-1-fluor-ethyl)-phosphorsäureesterchlorid, 1500 g (8,85 Mol) Thiophosphorylchlorid und 12,7 g (0,057 Mol) Phosphor(V)sulfid werden 5 Tage auf 140 °C Badtemperatur erhitzt und anschließend destilliert.
Man erhält 430 g (83,8 % der Theorie)· O-(2-Chlor-1-fluorethyl)-thionophosphorsäurediesterchlorid vom Siedepunkt 43 °C/ 0,9 mbar.

Beispiel (V-3)

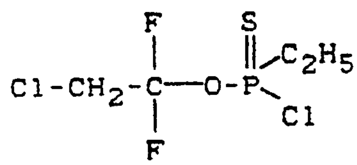

170 g (0,75 Mol) O-(2-Chlor-1,1-difluor-ethyl)-ethanphosphonsäureesterchlorid, 473g (2,8 Mol) Thiophosphorylchlorid und 3,4 g (0,016 Mol) Phosphor(V)sulfid werden 5 Tage auf 140 °C Badtemperatur erhitzt und anschließend destilliert.
Man erhält 92,2 g (50,6 % der Theorie) O-(2-Chlor-1,1-difluor-ethyl)-ethanthionophosphonsäureesterchlorid vom Siedepunkt 56 °C/ 1,5 mbar mit dem Retentionsinsdex 1159*

Beispiel (V-4)

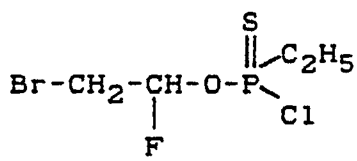

Eine Lösung von 50,7 g (0,2 Mol) O-(2-Brom-1-fluorethyl)-ethanphosphonsäureesterchlorid, 131 g (0,77 Mol) Thiophosphorylchlorid und 1,1 g (5 mMol) Phosphor(V)sulfid wird sechs Tage bei 140 °C Badtemperatur erhitzt und anschließend destilliert.
Man erhält 42,0 g (78 % der Theorie) O-(2-Brom-1-fluorethyl)-ethanthionophosphonsäurechlorid vom Siedepunkt 75 °C/0,15 mbar.

Beispiel (V-5)

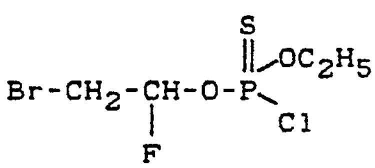

Eine Lösung von 165 g (0,6 Mol) O-(2-Brom-1-fluorethyl)-thionophosphorsäureesterdichlorid in 900 ml Toluol versetzt man bei 0 °C mit 204 g (0,6 Mol) einer 20 %igen Natriumethylatlösung, rührt das Gemisch 16 Stunden bei Raumtemperatur nach, wäscht es 2 mal mit Wasser, trocknet die organische Phase über Magnesiumsulfat und dampft das Toluol unter vermindertem Druck ab.
Man erhält 135,7 g (81 % der Theorie) O-Ethyl-O-(2-brom-1-fluor-ethyl)-thionophosphorsäurediesterchlorid.

Beispiel (V-6)

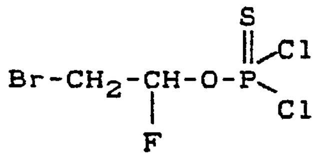

707,3 g (2,72 Mol) O-(2-Brom-1-fluor-ethyl)-phosphorsäureesterdichlorid, 1475 g (8,71 Mol) Thiophosphorylchlorid und 15 g (0,067 Mol) Phosphor(V)sulfid werden 5 Tage auf 140 °C Badtemperatur erhitzt und anschließend destilliert.

Man erhält 606 g (80,6 % der Theorie) O-(2-Brom-1-fluorethyl)-thionophosphorsäureesterdichlorid vom Siedepunkt 52 °C/0,4 mbar.

Beispiel (V-7)

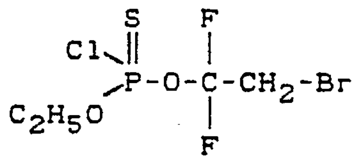

Eine Lösung von 88,2 g (0,3 Mol) O-(2-Brom-1,1-difluor-ethyl)-thionophosphoräureesterdichlorid in 200 ml Ether versetzt man unter Kühlung mit 100 ml (1,7 Mol) Ethanol, rührt das Gemisch 16 Stunden bei Raumtemperatur, engt ein, nimmt in Ligroin auf, wäscht 2 mal mit Wasser, trocknet die organische Phase über Magnesiumsulfat und zieht das Lösungsmittel unter vermindertem Druck ab.
Man erhält in 76 %iger Ausbeute das O-Ethyl-O-(2-brom-1,1-difluor-ethyl)-thionophosphorsäurediesterchlorid mit dem Retentionsindex 1242*.

Beispiel (V-8)

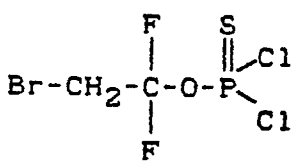

1667 g (6,0 Mol) O-(2-Brom-1,1-difluor-ethyl)-phosphorsäureesterdichlorid, 3257 g (19,2 Mol) Thiophosphorylchlorid und 32,7 g (0,147 Mol) Phosphor(V)sulfid, werden 5 Tage auf 140 °C erhitzt und anschließend destilliert. Man erhält 1132 g (64,2 % der Theorie) O-(2-Brom-1,1-difluor-ethyl)-thionophosphorsäureesterdichlorid vom Siedepunkt 46 °C / 0,3 mbar, mit dem Retentionsindex 1119*.

Die übrigen Ausgangsverbindungen können in analoger Weise erhalten werden.

Verwendungsbeispiele

In den nachfolgenden Verwendungsbeispielen wurde die nachstehend angegebene Verbindung als Vergleichsverbindung eingesetzt:

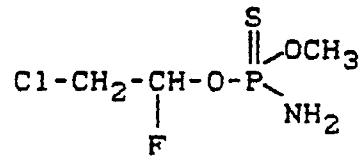

(A)

(bekannt aus DE-OS 26 29 016, welcher die US-PS 4 159 324 entspricht).

## Beispiel A

Grenzkonzentrations-Test / Bodeninsekten
Testinsekt: Phorbia antiqua-Maden (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten z.B. die Verbindungen der Herstellungsbeispiele 1, 2, 4, 6, 7, 8, 11, 12, 13, 15, 16 und 17 bei einer beispielhaften Konzentration von 20 ppm einen Wirkungsgrad von 100 %, während die Vergleichsverbindung bei der gleichen Konzentration nur 0 % ergab.

## Beispiel B

Grenzkonzentrations-Test / Wurzelsystemische Wirkung
Testinsekt: Myzus persicae
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

Bei diesem Test zeigte z.B. die Verbindung der Herstellungsbeispiele 6, 10 und 17 bei einer beispielhaften Konzentration von 10 ppm eine Wirkung von 100 % während die Vergleichsverbindung bei der gleichen Konzentration 0 % Wirkung ergab.

## Beispiel C

Grenzkonzentrations-Test / Nematoden
Testnematode: Meloidogyne incognita
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27 °C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Bei diesem Test zeigte z.B. die Verbindung der Herstellungsbeispiele 1, 11, 13 und 16 bei einer beispielhaften Konzentration von 2,5 ppm eine Wirkung von 100 %, während die Vergleichsverbindung bei der gleichen Konzentration 0 % Wirkung ergab.

## Ansprüche

1. (Di)(thio)phosphor(phosphon)säure(amid)ester der allgemeinen Formel

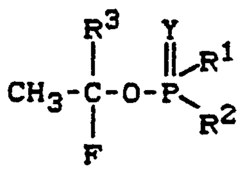

(I)

in welcher
$R^1$ für gegebenenfalls substituierte Reste aus der Reihe Alkyl, Alkoxy, Alkenyl, Alkenyloxy und Alkinyloxy steht,
$R^2$ für Alkoxy, Alkylthio oder für
einen Rest

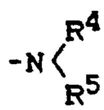

steht,
worin
$R^4$ und $R^5$ gleich oder verschieden sind und unabhängig voneinander für Wasserstoff und für gegebenenfalls substituierte Reste aus der Reihe Alkyl, Cycloalkyl, Alkenyl oder Alkinyl stehen
oder
gemeinsam mit dem Stickstoffatom, an welches sie gebunden sind, einen 5- bis 7-gliedrigen, gesättigten oder ungesättigten Ring bilden,
$R^3$ für Wasserstoff, Halogen oder Alkyl steht und
Y für Sauerstoff oder Schwefel steht.

2. Verbindungen der Formel (I) gemäß Anspruch 1, in welchen
$R^1$ für gegebenenfalls durch Halogen oder $C_1$-$C_4$-Alkoxy substituierte Reste aus der Reihe $C_1$-$C_6$-Alkyl, $C_1$-$C_6$-Alkoxy, $C_2$-$C_6$-Alkenyl, $C_2$-$C_6$-Alkenyloxy und $C_2$-$C_6$-Alkinyloxy steht,
$R^2$ für $C_1$-$C_6$-Alkoxy, $C_1$-$C_6$-Alkylthio oder für einen Rest

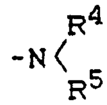

steht,
worin
$R^4$ und $R^5$ gleich oder verschieden sind und unabhängig voneinander für Wasserstoff, für gegebenenfalls durch Halogen oder $C_1$-$C_4$-Alkoxy substituiertes $C_1$-$C_4$-Alkyl; für gegebenenfalls durch Methyl, Ethyl, Fluor und/oder Chlor substituiertes Cycloalkyl mit 3 bis 8 Kohlenstoffatomen; für gegebenenfalls durch Halogen, oder $C_1$-$C_4$-Alkyl substituiertes $C_2$-$C_6$-Alkenyl oder $C_2$-$C_6$-Alkinyl stehen,
oder
gemeinsam mit dem Stickstoffatom einen 5- bis 6-gliedrigen, gesättigten oder ungesättigten Ring bilden,
$R^3$ für Wasserstoff, Fluor, Chlor oder $C_1$-$C_6$-Alkyl steht und
Y für Sauerstoff oder Schwefel steht.

3. Verbindungen der Formel (I), gemäß Anspruch 1,
in welchen
$R^1$ für gegebenenfalls durch Fluor, Chlor, Methoxy oder Ethoxy substituierte Reste aus der Reihe $C_1$-$C_4$-Alkyl, $C_1$-$C_4$-Alkoxy, $C_2$-$C_4$-Alkenyl, $C_2$-$C_3$-Alkenyloxy und $C_2$-$C_4$-Alkinyloxy steht,
$R^2$ für $C_1$-$C_4$-Alkoxy, $C_1$-$C_4$-Alkylthio oder für einen Rest

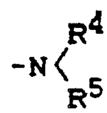

steht,
worin
$R^4$ und $R^5$ gleich oder verschieden sind und unabhängig voneinander für Wasserstoff, für gegebenenfalls durch Fluor, Chlor, Brom, Methoxy oder Ethoxy substituiertes $C_1$-$C_4$-Alkyl, für gegebenenfalls durch Methyl, Ethyl, Fluor und/oder Chlor substituiertes Cycloalkyl mit 3 bis 6 Kohlenstoffatomen; für gegebenenfalls durch Fluor, Chlor, Methyl oder Ethyl substituiertes $C_2$-$C_4$-Alkenyl oder $C_2$-$C_4$-Alkinyl stehen,
oder
gemeinsam mit dem Stickstoffatom, an welches sie gebunden sind, für Piperidyl und Pyrrolidinyl stehen,
$R^3$ für Wasserstoff, Fluor, Chlor oder $C_1$-$C_4$-Alkyl steht und
Y für Sauerstoff oder Schwefel steht.

4. Verbindungen der Formel (I) gemäß Anspruch 1 in welchen
$R^1$ für Methyl, Ethyl, Methoxy, Ethoxy und Chlorethoxy steht,
$R^2$ für Methoxy, Ethoxy, n- oder i-Propoxy, Methylthio, Ethylthio, n- oder i-Propylthio, n-, i-, s-, t-Butylthio oder für einen Rest

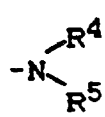

steht, worin
$R^4$ für Wasserstoff, Methyl oder Ethyl steht,
$R^5$ für Methyl, Ethyl, n-Propyl, i-Propyl, i-Butyl, s-Butyl oder Allyl steht,
$R^3$ für Wasserstoff oder Fluor steht und
Y für Sauerstoff oder Schwefel steht.

5. Verfahren zur Herstellung von (Di)(thio)phosphor(phosphon)säure(amid)ester der allgemeinen Formel

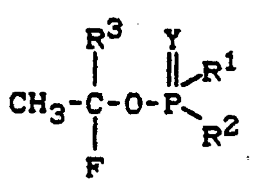

(I)

in welcher
$R^1$ für gegebenenfalls substituierte Reste aus der Reihe Alkyl, Alkoxy, Alkenyl, Alkenyloxy und Alkinyloxy steht,
$R^2$ für Alkoxy, Alkylthio oder für
einen Rest

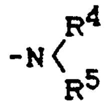

steht,
worin
$R^4$ und $R^5$ gleich oder verschieden sind und unabhängig voneinander für Wasserstoff und für gegebenenfalls substituierte Reste aus der Reihe Alkyl, Cycloalkyl, Alkenyl oder Alkinyl stehen
oder
gemeinsam mit dem Stickstoffatom, an welches sie gebunden sind, einen 5- bis 7-gliedrigen, gesättigten oder ungesättigten Ring bilden,
$R^3$ für Wasserstoff, Halogen oder Alkyl steht und
Y für Sauerstoff oder Schwefel steht,
dadurch gekennzeichnet, daß man
(a) O-(2-Halogen-1-fluor-ethyl)-(di)(thio)phosphor(phosphon)säure(amid)ester-Derivate der Formel

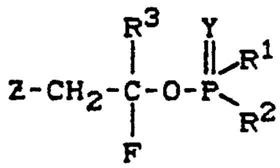

(II)

in welcher
$R^1$, $R^2$, $R^3$ und Y die oben angegebene Bedeutung haben und
Z für Halogen, vorzugsweise Chlor oder Brom steht,
mit Reduktionsmitteln gegebenenfalls in Gegenwart eines Verdünnungsmittels umsetzt,
oder
(b) wenn man O-(1-Fluor-ethyl)-(di)(thio)phosphor(phosphon)säureesterhalogenide der Formel

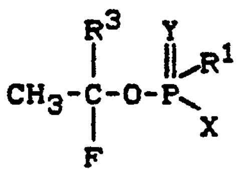

(III)

in welcher
$R^1$, $R^3$ und Y die oben angegebene Bedeutung haben und
X für Halogen steht,
mit Verbindungen der Formel
$R^2$-M (IV)
in welcher
$R^2$ die oben angegebene Bedeutung hat und
M für Wasserstoff oder ein Alkalimetall-oder Erdalkalimetalläquivalent (z. B. Natrium, Kalium oder Calzium) steht,
gegebenenfalls in Gegenwart eines Verdünnungsmittels und gegebenenfalls in Gegenwart eines Säureakzeptors umsetzt.

6. Schädlingsbekämpfungsmittel, gekennzeichnet durch einen Gehalt an mindestens einer Verbindung der Formel (I), gemäß den Ansprüchen 1 oder 5.

7. Verwendung von Verbindungen der Formel (I) gemäß den Ansprüchen 1 oder 5 zur Bekämpfung von Schädlingen.

8. Verfahren zur Bekämpfung von Schädlingen, dadurch gekennzeichnet, daß man Verbindungen der Formel (I) gemäß den Ansprüchen 1 oder 5 auf Schädlinge und/oder ihren Lebensraum einwirken läßt.

9. Verfahren zur Herstellung von Schädlingsbekämpfungsmitteln, dadurch gekennzeichnet, daß man Verbindungen der Formel (I) gemäß den Ansprüchen 1 oder 5 mit Streckmitteln und/oder oberflächenaktiven Mitteln vermischt.

10. O-(1-Fluor-ethyl)-(di)-(thio)phosphor(phosphon)säureesterhalogenide der Formel

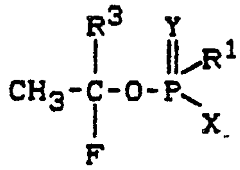

(III)

in welcher

$R^1$ für gegebenenfalls substituierte Reste aus der Reihe Alkyl, Alkoxy, Alkenyl, Alkenyloxy und Alkinyloxy steht,

$R^3$ für Wasserstoff, Halogen oder Alkyl steht und

Y für Sauerstoff oder Schwefel steht und

X für Halogen steht.